# EUROPÄISCHE PATENTANMELDUNG

(11) **EP 0 768 472 A2**
(43) Veröffentlichungstag der Anmeldung: **16.04.1997**
(21) Anmeldenummer: 96116138.7
(22) Anmeldetag: 09.10.1996
(51) Int. Cl.: F16C 3/02

(54) **Welle aus Kohlefaserverbundmaterial**

(30) Priorität: 14.10.1995 DE 19538360
(71) Anmelder: DORNIER GmbH, D-88039 Friedrichshafen (DE)
(72) Erfinder: Pimiskern, Klaus, Dipl.-Ing., 88718 Daisendorf (DE); Strobel, Frank, Dipl.-Ing., 88690 Uhldingen-Mühlhofen (DE)
(74) Vertreter: Meel, Thomas

(57) **Zusammenfassung**

Die Erfindung betrifft eine Kardanwelle, insbesondere für Kraftfahrzeuge, aus Kohlefaserverbundmaterial, welches mindestens zwei Arten von C-Fasern enthält, wobei eine der C-Faser-Arten eine hohe Festigkeit zur Übertragung des Drehmoments und eine Orientierung von ca. +/- 45^{o} relativ zur Wellenachse aufweist, wobei die andere C-Faser-Art einen hohen Elastizitätsmodul zur Erhöhung der Eigenfrequenz und eine Orientierung von ca. 0^{o} zur Wellenachse aufweist.

## Beschreibung

Die Erfindung betrifft eine Kardanwelle, insbesondere für Kraftfahrzeuge, nach dem Oberbegriff des Anspruch 1.

Kardanwellen dienen allgemein zur Übertragung einer Antriebsleistung, insbesondere mit hohen Drehmomenten. Dabei muß die max. Drehzahl geringer als die Eigenfrequenz der Welle sein (unterkritischer Betrieb). Die Eigenfrequenz wiederum ist von dem Eigengewicht und der Biegesteifigkeit der Welle abhängig. Angestrebt werdem muß ein geringes Gewicht bei hoher Biegesteifigkeit. Besondere Bedeutung hat in diesem Zusammenhang auch die Länge der Welle, da sie stark in die biegekritische Drehzahl eingeht.

Gelenkwellen für Personenkraftfahrzeuge sind üblicherweise aus Stahl gefertigt. In neuster Zeit sind jedoch auch Gelenkwellen aus Materialien wie Al, GFK oder CFK bekannt geworden.

Die Gelenkwellen aus Stahl bieten den Vorteil hoher Festigkeit und hoher Biegesteifigkeit. Nachteilig an diesen Wellen ist ihr hohes Gewicht, was zu einer niedrigen Eigenfrequenz führt.

Demgegenüber bieten die Gelenkwellen aus GFK oder CFK den Vorteil eines niedrigen Gewichts. Die Biegesteifigkeit der bekannten Wellen dieses Typs ist jedoch zu gering, um hohe Eigenfrequenzen zu erreichen. Eine derartige Fahrzeug-Antriebswelle mit einer hochfesten C-Verstärkungsfaser ist aus der DE 31 39 247 A1 bekannt. Die C-Fasern weisen eine Orientierung von +/- 40^{o} bis +/- 50^{o} relativ zur Wellenachse auf. Die DE-OS 27 16 249 offenbart ebenfalls eine Antriebswelle mit einer C-Verstärkungsfaser, wobei die Fasern in Umfangsrichtung und spiralförmig um die Wellenachse verlaufen.

Die EP 0 145 810 beschreibt eine elastische Welle, bei der zur Erreichung einer hohen Festigkeit mit dem Ziel einer möglichst guten Drehmomentübertragung mehrere C-Faser-Arten verwendet werden. Sämtliche Arten von C-Fasern weisen die gleiche Orientierung von ca +/- 45^{o} zur Wellenachse auf. Diese Lehre bildet den Oberbegriff des Anspruch 1.

Aufgabe der Erfindung ist es somit, eine Kardanwelle zu schaffen, die neben einer hohen Festigkeit auch eine hohe Eigenfrequenz aufweist, so daß die Kardanwelle in einem weiten Drehzahlbereich, insbesondere bei hohen Drehzahlen, einsetzbar ist.

Diese Aufgabe wird mit der Kardanwelle nach Anspruch 1 gelöst. Vorteilhafte Ausgestaltungen sind Gegenstände weiterer Ansprüche.

Erfindungsgemäß umfaßt das Kohlefaserverbundmaterial (CFK) der Kardanwelle mindestens zwei unterschiedliche Arten von Kohlefasern. Dabei weist eine der C-Faserarten eine hohe Festigkeit zur Übertragung des Drehmoments auf. Die andere C-Faserart (im folgenden auch hochmodule Faser genannt) weist ein hohes Elastizitätsmodul zur Erhöhung des Biegesteifigkeit auf. Durch diese zweite Faserart wird eine Erhöhung der Eigenfrequenz erreicht. Die hochfeste Faser weist eine Orientierung von ca. +/- 45^{o} zur Wellenachse auf. Die hochmodule Faser weist eine Orientierung von ca. 0^{o} zur Wellenachse auf.

Wie bereits erwähnt, geht die Länge der Welle besonders stark in die Biegesteifigkeit ein. Um eine ausreichende Biegesteifigkeit auch bei längeren Wellen aufrechtzuerhalten, kann deshalb der Anteil der hochmodulen C-Fasern erhöht werden. Darüberhinaus kann ganz allgemein die Zusamensetzung der Fasern variiert werden, um eine optimale Kombination von Festigkeit und E-Modul zu erhalten.

Durch die Verwendung von CFK-Material wird das Gewicht der Kardanwelle niedrig gehalten. Um die Gesamtmasse der Welle weiter zu reduzieren, werden die an den Enden der Kardanwelle angebrachten Flansche aus C-Faserverbundmaterial hergestellt. Das hat den zusätzlichen Vorteil, daß die bekannten Probleme bei der Verbindung von Faserverbundmaterialien und Metallen entfallen.
Vorteilhaft werden Kurzfasern eingesetzt. Als Matrixmaterial werden insbesondere Thermoplastmaterialien verwendet.

Flansch und Kardanwelle sind in einer bevorzugten Ausführungsform kraft- und formschlüssig verbunden. Das kann vorteilhaft dadurch geschehen, daß die Welle an ihren Enden eine Perforation aufweist, in die das Kohlefaserverbundmaterial des Flanschs eingespritzt wird. Beim Einpressen ergibt sich eine bevorzugte Faserrichtung in Fließrichtung, was zu einer erhöhten Scherfestigkeit der entstehenden Formschlußnoppen führt.

Auf der Innenseite der rohrförmigen Welle, und zwar im Bereich der Perforation, kann besonders vorteilhaft eine Hülse angeordnet sein. Sie dient zur Abdichtung der Kardanwelle sowie zum Abdichten beim Einspritzen des Kohlefaserverbundmaterials.

Die erfindungsgemäße Kardanwelle eignet sich vor allem zum Einsatz in Kraftfahrzeugen, insbesondere in PKWs. Sie ist vorteilhaft auch bei hohen Drehzahlen (z.B. im Bereich von 8000 bis 10000 U/min) einsetzbar. Sie behält ihre vorteilhaften Eigenschaften auch bei größerer Länge der Welle.

Die Erfindung wird anhand von Fig. näher erläutert. Es zeigen:
- Fig. 1: eine erfindungsgemäße Welle (dreidimensionale Darstellung);
- Fig. 2: eine erfindungsgemäße Welle in Schnittdarstellung;
- Fig. 3: eine erfindungsgemäße Welle in drei Ansichten.

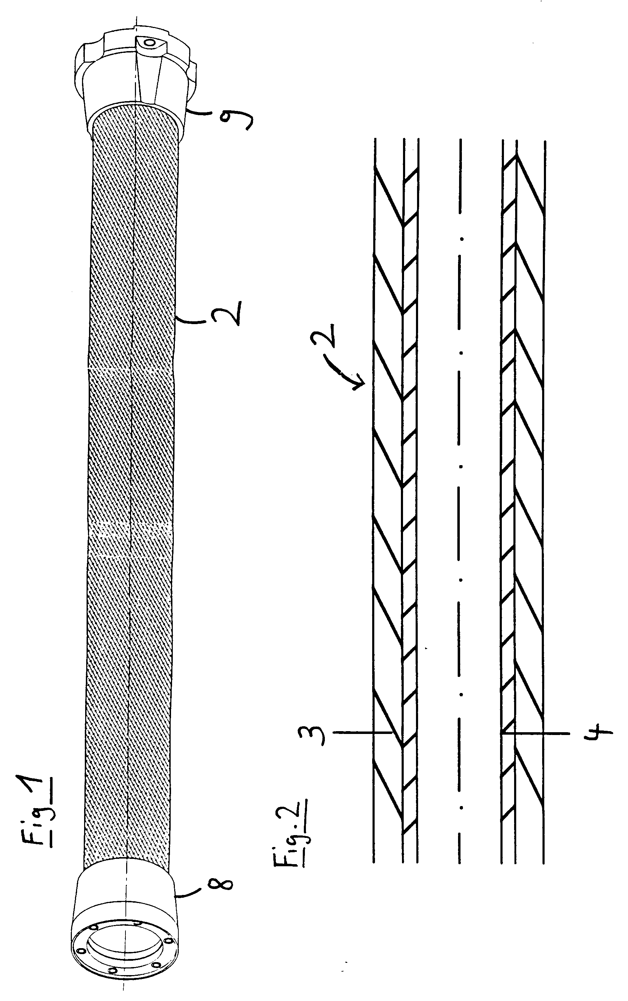

Fig. 1 zeigt eine erfindungsgemäße Welle in dreidimensionaler Darstellung. Die Welle 2 selbst ist als rohrförmiger Körper aus C-Faserverbundmaterial mit zwei unterschiedlichen Faser-Arten ausgebildet. Sie ist an ihren Enden mit Flanschen 8,9 aus C-faserverstärktem Thermoplast, bevorzugt mit Kurzfasern, verbunden.

Fig. 2 zeigt eine Ausführung einer erfindungsgemäßen Welle 2 in Schnittdarstellung. Die Schnittebene geht durch die Längsachse der Welle 2. Die Welle ist aufgebaut aus zwei Schichten 3,4 aus C-Faserverbundmaterial. Die äußere Schicht 3 des Faserverbundmaterials enthält eine hochfeste Faser, die für eine ausreichende Drehmomentübertragung sorgt. Sie weist eine Orientierung von +/- 45^{o} zur Wellenachse auf. Die innere Schicht 4 enthält eine hochmodule Faser mit der Orientierung 0^{o} zur Wellenachse. Diese Schicht sorgt für eine Erhöhung der Eigenfrequenz.
Ebenfalls möglich ist es, die innere Schicht mit der hochfesten Faser (Orientierung +/- 45^{o}) und die äußere Schicht mit der hochmodulen Faser (Orientierung 0^{o}) auszubilden.

Vorteilhaft weist die hochfeste Faser eine Zugfestigkeit mit mindestens σ_{zul} = 100 N/mm², besonders vorteilhaft σ_{zul} > 200 N/mm² auf.
Die hochmodule Faser weist bevorzugt einen E-Modul von mindestens E= 100 000, besonders vorteilhaft E > 150 000 auf.

Als hochfeste Faser wird in einer bevorzugten Ausführung die Faser T300 der Fa. Torray verwendet (σ_{zul} = 260 N/mm²).
Als hochmodule Faser wird z.B. die Faser M40 der Firma Torray (E= 180 000) oder K137 der Fa. Mitsubishi (E=340 000) verwendet.

Es ist anzumerken, daß zur Erreichung der erfindungsgemäßen Vorteile die Anordnung der verschiedenen Faserarten innerhalb des Bauteils beliebig sein kann. Insbesondere ist es möglich, mehr als zwei Schichten zu verwenden, wobei von Schicht zu Schicht eine andere Faserart verwendet wird. Möglich ist auch eine beliebige Durchmischung oder Verflechtung der unterschiedlichen Faserarten innerhalb der Welle.

In einer vorteilhaften Ausführungsform umfaßt die Gelenkwelle fünf Schichten:
1. hochmodule Fasern, Orientierung 90^{o}
2. hochfeste Fasern, Orientierung+/- 45^{o}
3. hochmodule Fasern, Orientierung 0^{o}
4. hochfeste Fasern, Orientierung +/- 45^{o}
5. nochmodule Fasern, Orienterung 90^{o}.

Die angegebenen Orientierungen sind auf die Wellenachse (Rohrachse) bezogen. Die an der Oberfläche des Bauteils liegenden Schichten mit der Orientierung 90^{o} dienen zur besseren Herstellbarkeit und Handhabbarkeit der Welle. Sie stellen den äußeren Abschluß der Welle dar und verhindern z.B. den Harzfluß bei der Herstellung.

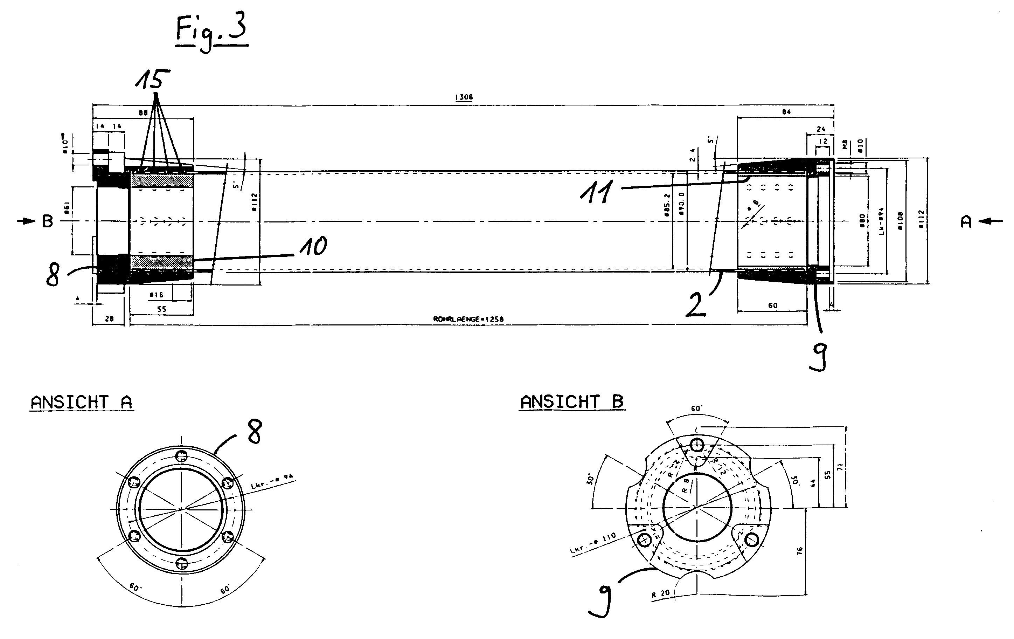

Fig. 3 zeigt oben eine weitere Ausführung der erfindungsgemäßen Welle 2, wobei insbesondere die Verbindung der beiden Flansche 8,9 mit der Welle 2 dargestellt ist. Beispielhafte Bemaßungen sind ebenfalls angegeben.
Die Flansche 8,9 sind an den Enden der Welle 2 kraft- und formschlüssig mit dieser verbunden. Dazu weisen die Rohrenden eine Perforation 15 auf, in diesem Beispiel acht gleichmäßig über den Umfang verteilte Reihen mit jeweils vier Durchbrechungen. Diese Durchbrechungen 15 sind ausgefüllt von dem Faserverbundmaterial (C-Faserverstärktes Thermoplastmaterial) der Flansche 8,9. Die verwendeten Fasern sind bevorzugt Kurzfasern. Der Formschluß erfolgt vorteilhaft durch Einspritzen des Kunststoffs in die Durchbrechungen 15. Dadurch ergibt sich beim Einpressen eine bevorzugte Faserrichtung in Fließrichtung, was zu einer erhöhten Scherfestigkeit der entstehenden Formschlußnoppen führt.
Auf der Innenseite der rohrförmigen Welle 2, im Bereich der Durchbrechungen 15, ist eine Hülse 10,11 angeordnet. Sie dient bei der Herstellung der Welle zur Abdichtung beim Spritzen der Flansche. Nach dem Herstellungsvorgang verbleibt diese Hülse in der Welle und dient als Abschluß und Abdichtung des Rohrs. Die Hülsen können als Massenartikel sehr kostengünstig hergestellt werden.

In Fig. 3 sind links und rechts unten sind die Flansche 8,9 in der Ansicht A bzw. B dargestellt.

## Patentansprüche

1. Kardanwelle, insbesondere für Kraftfahrzeuge, aus Kohlefaserverbundmaterial, welches mindestens zwei Arten von C-Fasern enthält, wobei eine der C-Faser-Arten eine hohe Festigkeit zur Übertragung des Drehmoments und eine Orientierung von ca. +/- 45^{o} relativ zur Wellenachse aufweist, **dadurch gekennzeichnet**, daß die andere C-Faser-Art einen hohen Elastizitätsmodul zur Erhöhung der Eigenfrequenz und eine Orientierung von ca. 0^{o} zur Wellenachse aufweist.

2. Kardanwelle nach Anspruch 1, **dadurch gekennzeichnet**, daß an mindestens einem Ende Flansche (8,9) aus C-Faser-verstärktem Thermoplastmaterial angeordnet sind.

3. Kardanwelle nach Anspruch 2, **dadurch gekennzeichnet**, daß der Flansch (8,9) mit der Gelenkwelle (2) kraft- und formschlüssig verbunden ist, indem mindestens ein Gelenkwellenende eine Perforation (15) aufweist, in die das Kohlefaserverbundmaterial des Flanschs (8,9) eingespritzt wird.

4. Kardanwelle nach einem der Ansprüche 2 oder 3, **dadurch gekennzeichnet**, daß auf ihrer Innenseite, im Bereich der Perforation (15), eine Hülse (10,11) zur Abdichtung der Gelenkwelle und/oder zum Abdichten beim Einspritzen des Kohlefaserverbundmaterials vorhanden ist.
